# EUROPEAN PATENT APPLICATION

(11) **EP 1 713 286 A2**
(43) Date of publication of application: **18.10.2006**
(21) Application number: 06251750.3
(22) Date of filing: 30.03.2006
(51) Int. Cl.: H04N 17/00

(54) **System and method for providing calibration/verification services at a CATV service organization site on a prepaid basis**

(30) Priority: 11.04.2005 US 104313
(71) Applicant: Acterna, L.L.C, Indianapolis Indiana, 46203-6109 (US)
(72) Inventor: Burgett, Doug, Flat Rock, Indiana 47234 (US); Swanson, Brian, Westfield, Indiana 46074 (US); Robertson, William, Bradenton, Florida 34202 (US); Zeyak, Michael, Greenfield, Indiana 46140 (US)
(74) Representative: McKechnie, Neil Henry

(57) **Abstract**

An apparatus for calibrating test equipment at a CATV service organization or customer site includes a calibration unit for calibrating a signal level measurement circuit that is operable to generate signal level measurements for a set of broadband RF signals and an access monitor for enabling operation of the calibration unit in response to a token indicative of calibration credits being coupled to the access monitor. The access monitor may also include a port for receiving a token containing calibration credit data. The port may be a USB port, a smart card reader, or a keypad, for example. A memory fob received in the USB port may be interrogated for calibration credit data that are used to enable a calibration procedure and a smart card may be received in the smart card reader for similar purposes. The keypad may be used to enter a password and account data associated with the password may be read and evaluated to determine whether a requested calibration procedure may be performed. The inventive apparatus enables test equipment to be calibrated at a CATV service organization, authorized service center, or test equipment owner (customer) site without sacrificing accountability for the calibrations performed by the calibration unit.

## Description

### Field of the Invention

The present invention relates generally to automatic test equipment, and more particularly, to calibration units for meters and analyzers.

### Background of the Invention

Cable networks are communication networks that communicate signals between a centralized headend and a plurality of customer premise devices. Cable networks have many forms, but typically include a dispersed network of coaxial cable. Many cable networks further include a substantial portion of fiber optic lines. Such networks are known as hybrid fiber coax or HFC networks. Such networks are common.

Historically, cable networks were employed primarily for the delivery of the television program signals. To this end, the cable network headend transmitted a TV signal to each subscriber through a hierarchical network of coaxial cable, referred to as the cable plant. The signal was divided into a plurality of channels, each channel occupying an approximately 6 MHz wide band of the overall broadband signal.

The proper operation of cable systems involves field testing. Because the cable plant is dispersed throughout the entire cable service area, the network can experience damage or other detrimental phenomena in varied, isolated portions of the network. As a result, many customers may have excellent service while a few customers cannot receive one or more channels clearly due to a localized problem. Cable service providers have often used handheld signal measurement equipment, such as RF meters, analyzers, and the like, to help diagnose problems and perform network analysis.

Historically, the test equipment included an RF signal receiver and circuitry for measuring signals received on select channels of the system. Measurement of a large number of channels provides a rough spectrum analysis of the cable network. Various test devices that measure analog cable television channels were developed for this and other purposes.

While the cable television system employed analog NTSC standard television signals for years, cable service providers have more recently been switching over to digital television signal broadcasting because of the better cost/service ratios. Because much of the field test equipment developed for cable networks was specifically designed to test analog cable television channels, new digital cable field measurement technologies had to be developed. Such devices were developed, and typically measured the signal level available on selected (or all) channels of the cable television system.

The latest trend in cable systems is to provide two way high speed data communications through the cable network. A customer may thus use a coaxial cable connection to obtain both audio-visual broadcast programming information *and* access to the Internet for electronic mail, downloads and browsing. At present, signal level measurements and other related physical layer measurements still provide useful information for troubleshooting and analyzing network performance. The meters and other analyzers used for evaluating network performance, however, require calibration on an occasional or periodic basis. Calibration enables the technician to remain confident that the measurements obtained with the meters and analyzers are accurate and reliable.

Currently, calibration requires a CATV service organization to take the test meters and analyzers out of service, ship them to a site for calibration and adjustment, if necessary, and then return them to the field technicians upon their delivery from the calibration site. This procedure requires the service organization to maintain additional units so properly calibrated meters and test equipment may be rotated to the field technicians while their equipment is being calibrated. Otherwise, the service organization suffers down time while waiting for the test equipment to be calibrated and return. The expense of maintaining units for use while other test equipment is being calibrated may be significant. Therefore, there is a need for quicker calibration turnaround that does not require more test equipment than necessary to support the number of field technicians being used by the service organization.

One way of addressing this issue is for the CATV to buy its own calibration equipment and keep it at the service organization site for the calibration of test equipment. This would reduce the time that a piece of test equipment is absent from a field technician. The cost of buying or even leasing calibration equipment, however, is usually too significant an expense for a service organization to absorb without adverse impact to its profitability. Therefore, there is a need for providing calibration services for test equipment at a CATV service organization site without requiring the service organization to buy or lease the equipment.

### Summary of the Invention

The present invention addresses the above need, as well as others, by providing a calibration unit for CATV signal meters and analyzers at a service organization's or customer's site while maintaining accountability of the calibration unit's use. A first embodiment of the invention is an apparatus that includes a calibration unit for calibrating CATV test equipment and an access monitor for enabling the operation of the calibration unit in response to a calibration credit being available for a calibration procedure. The access monitor may include a security key for receiving a token containing calibration credit data. The security key may be a USB port for receiving a memory fob containing calibration credit data, a smart card reader for receiving a smart card containing calibration credit data, or another type of memory device interface for downloading calibration credit data from a token or other memory device into the access monitor. Credit data may also be provided via the Internet or other wide area computer network. These data may be verified by password evaluation or the like. The key may be coupled to a keypad so a user may enter a password and the access monitor evaluates the password to determine whether it is authorized and, if it is, parse the account data associated with the password to determine whether it contains credit data for a requested calibration procedure. In response to the access monitor determining that a calibration credit is available for a calibration procedure, a calibration procedure signal generator generates a signal that enables the calibration unit to perform a calibration procedure on a signal level measurement circuit coupled to the calibration unit. The calibration credit data may also include credits for more than one type of calibration procedure. If so, the available calibration credit must correspond to the requested calibration procedure before the calibration unit is enabled for performance of the requested calibration procedure.

The principles of the present invention may also be performed by implementing a method of the present invention. The method comprises determining whether a calibration credit is available for a requested calibration procedure for a signal measurement circuit and enabling operation of a calibration unit for performing the requested calibration procedure in response to a calibration procedure being available. The calibration credit may be received from a token. The method may also include coupling a memory fob to a calibration unit for receiving calibration credit data from the memory fob, determining whether the calibration credit data indicates a calibration credit is available for the requested calibration procedure, and updating the calibration data in the memory fob in response to the requested calibration being initiated. Alternatively or additionally, the calibration data may be obtained from a smart card and the calibration data stored in the smart card may be updated. The method may also generate at least one signal for enabling a calibration unit to perform a calibration procedure or one calibration procedure from a plurality of calibration procedures.

The system and method of the present invention enable a calibration unit to be located at a CATV service organization or customer site so the CATV organization or customer may purchase one or more calibration credits. The account data regarding the calibration credits may be stored in a memory fob, smart card, or other token. Alternatively, the account information may be stored in a memory associated with the calibration unit. To perform a calibration procedure, a user couples a piece of test equipment, such as a signal level measurement circuit, to the calibration unit. By entering an account password or coupling a token to the access monitor, a determination may be made that a calibration credit is available for the piece of test equipment. If one is available, the calibration unit may then automatically perform the calibration and install the calibration factors in the piece of test equipment to adjust the test equipment, if necessary. These calibration data may also be stored in the calibration unit for historical purposes. If the calibration unit is capable of performing more than one type of calibration procedure, then the access monitor determines whether a calibration credit exists for the requested calibration procedure before enabling the calibration unit. In this manner, the calibration unit only performs a calibration procedure in response to a calibration credit being available. Thus, the owner of the calibration unit is more willing to allow the calibration unit to be placed at the CATV service organization site because accountability of the unit's use is available.

The above described features and advantages, as well as others, will become more readily apparent to those of ordinary skill in the art by reference to the following detailed description and accompanying drawings. Some variations of the invention may solve other problems not mentioned, and may only solve problems related to those described above.

### Brief Description of the Drawings

Fig. 1 shows a block diagram of an exemplary broadband communication system and an exemplary testing device that may be calibrated with a system made in accordance with the principles of the present invention;
Fig. 2 shows a block diagram of an exemplary system for calibrating broadband communication test equipment;
Fig. 3 shows a schematic block diagram of a test apparatus that may be calibrated by the exemplary system shown in Fig. 2;
Fig. 4 shows a display of an exemplary main menu window for the system shown in Fig. 2;
Fig. 5 shows a display of an exemplary calibration report listing window that may be selected from the main menu shown in Fig. 4;
Fig. 6 shows a display of a window containing an exemplary calibration report in graphical form that may be selected from the report listing shown in Fig. 5;
Fig. 7 shows a display of an exemplary system status window that may be selected from the main menu shown in Fig. 4;
Fig. 8 shows a display of an exemplary security data window that may be selected from the system status shown in Fig. 7;
Fig. 9 shows a display of a window containing data regarding an ongoing meter calibration;
Fig. 10 shows a display of a window containing a test connection setup for calibrating a test meter that may be selected from the calibration window shown in Fig. 9;
Fig. 11 is a flow diagram of an exemplary calibration procedure called a three star calibration;
Fig. 12 is a flow diagram of an exemplary calibration procedure called a four star calibration; and
Fig. 13 is a flow diagram of an exemplary calibration procedure called a five star calibration.

### Detailed Description

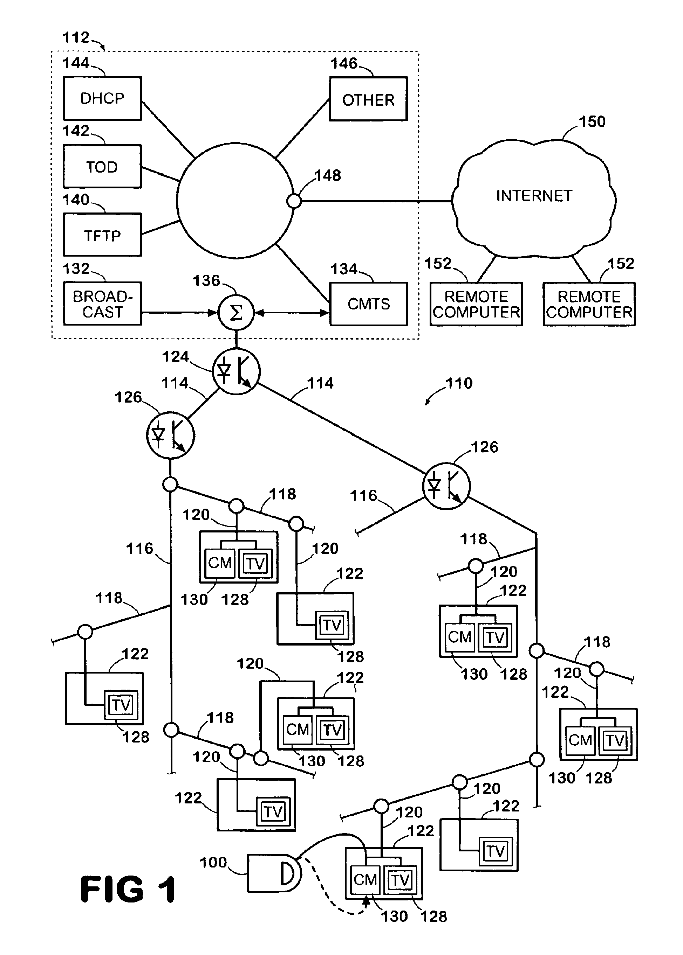

Fig. 1 shows an exemplary test configuration that employs an analysis device 100 within a communication network 110. The communication network 110 is a land-based broadband network typically known as a cable network. In the embodiment described herein, the communication network 110 is a hybrid fiber coax or HFC network that employs both fiber optic links and coaxial cable to effect radio frequency communications between a plurality of subscribers and a network headend 112. The network headend 112 is further operable to provide Internet communications between a plurality of subscribers and one or more devices 152 connected to the Internet 150. The devices 152 are external to the communication network 110. The analysis device 100 is operable to test multiple parameters of the network, including by way of example, the signal strength at a remote location of the network 110, whether Internet connectivity is available at remote locations of the network 110, and/or digital channel quality at remote locations of the network 110. The precise combination of features in the analysis device 100 may vary from embodiment to embodiment.

In further detail, the communication network 110 includes a headend 112, a fiber plant 114, a coaxial cable plant 116, and a plurality of network tap lines 118, a plurality of subscriber drop lines 120, a plurality of subscriber sites 122. In the embodiment described herein, a headend optical encoder/decoder 124 connects the network headend 112 to the fiber plant 114, and node optical encoder/decoders 126 connect the fiber plant 114 to the coaxial cable plant 116. As is known in the art, the fiber plant 114 is used as a dedicated line that provides communication between discrete portions of the network 110 and the headend 112. The coaxial cable plant 116 is used to distribute network communication within each discrete portion of the network 110.

Both the fiber plant 114 and the coaxial cable plant 116 are operable to propagate broadband signals, including but not necessarily limited to signals ranging from about 4 MHz to about 1000 MHz. The frequency spectrum may be divided into channels that are approximately 6 or 8 MHz wide, for example, and include a carrier frequency that is used to define the channel. In general, a carrier signal at the channel frequency is modulated with an information signal using either analog or digital techniques to provide content for the channel.

The headend 112 includes a source of broadcast program information 132, a cable modem termination system (CMTS) 134, a combiner 136, and a server network 138. The CMTS 134 is operably coupled to the combiner 136 and the server network 138. The source of broadcast program information 132 is also coupled to the combiner. The combiner 136 is operably connected to the optical encoder/decoder 124.

The source of broadcast program information 132 may be any well known device or set of circuits that obtain broadcast audio and/or visual information for broadcast over the network 110. For example, the source of broadcast program information 132 generally provides local television channels, subscription television channels, pay and free audio channels, free non-local television channels, television guide information and the like.

The CMTS 134 is a device, known in the art, that communicates data to and from cable modems 130 connected to the network 110 via the network 110. In one embodiment, the CMTS 134 is compatible with at least DOCSIS standard, which is known in the art. Obviously, in other embodiments, the CMTS 134 may be configured for other communication standards, including other Data Over Cable standards. The CMTS 134 facilitates communication between the cable modems 130 and other computers on the Internet 150 via the server network 138. The configuration and operation of a CMTS 134 is known in the art.

The server network 138 is by way of example a LAN/Ethernet network that has attached to it various servers that perform operations necessary to facilitate Internet connections between cable modems 130 on the network 110 and the Internet 150. These servers include, by way of example, a trivial file transfer protocol (TFTP) server 140, a time of day (TOD) server 142, and a dynamic host control protocol (DHCP) server 144. Each of the above servers implements DOCSIS Internet connection functionality. For example, the TFTP server 140 maintains configuration files for each cable modem 130. The configuration file for each cable modem 130 identifies the parameters/constraints of service for the modem 130. Such parameters/constraints are often dictated by a level of service purchased by the subscriber 122 associated with the modem 130. Thus, the parameters may, for example, define the maximum available bandwidth, the number of customer premise devices that may be attached to the modem 130, etc. The TOD server 142 provides time stamp information on certain communications between the modems 130 and the Internet 150. For example, e-mail messages generated by a modem 130 may be time-stamped using time information from the TOD server 142. The DHCP server 144 provides the IP address assignment for the cable modems 130. In general, as is known in the art, each cable modem 130 requests an Internet Protocol (IP) address when it attempts to establish a connection to the Internet 150. The DHCP server 144 performs the operations to obtain such addresses.

Additional servers 146 on the server network 138 include servers required to provide Voice over Internet Protocol (VOIP) services via the network 110. VOIP services provide telephony via an Internet connection through the cable modems 130 of subscribers. Subscribers using such services must include additional equipment connected to the cable modem 130. In particular, a device known as a multimedia terminal adapter (MTA) must be connected between the cable modem 130 and the subscriber telephone. Alternatively, the MTA could be integrated with a cable modem, which is known as an embedded MTA (eMTA). Details regarding VOIP services may be found in McIntosh, David, "Building a PacketCable™ Network: A Comprehensive Design for the Delivery of VoIP Services," (SCTE Cable Tec-Expo® 2002, which may be found at www.cablelabs.com), which is incorporated herein by reference.

The server network 138 further includes a router or switch 148 that connects to the Internet 150. Routers that connect a LAN such as the server network 138 to an Internet access point are well known.

Referring to the network 110 outside of the headend 112, the headend optical encoder/decoder 124 is coupled to a plurality of optical lines of the optical plant 114. While Fig. 1 shows two optical lines emanating from the headend optical encoder/decoder 124, the network 110 may suitably include large number of optical lines in the optical plant 114. The lines of the optical plant 114 extend to various geographical areas and terminate in node optical encoder/decoders 126. Each optical encoder decoder 126 is further connected to downstream coaxial cables of the cable plant 116. Extending from drop points on the cable plant 116 are network tap lines 118. The network tap lines 118 are also constructed of coaxial cable. Extending from each network tap line 118 is one or more subscriber drop lines 120. The subscriber drop line 120 provides coaxial cable terminations to a subscriber premise 122. As is known in the art the subscriber premise 122 may be a residence, commercial or industrial establishment. As discussed above, some subscribers have a television 128 operably connected to the subscriber drop line 120, a cable modem circuit 130 connected to the subscriber drop line 120, or both.

The analysis device 100 is intended to test or analyze aspects of the performance of the network 110 in a variety of locations, particularly those proximate one or more subscriber premises 122. In particular, service providers (i.e., the party that provides communication services via the network 110) often receive notification of trouble in the network 110 through customer complaints. Because the customer can typically only describe visible symptoms of a problem (e.g., cable modem will not connect, slow internet connectivity, fuzzy television picture, etc.), actual diagnosis of the problem often requires testing that is performed at the complaining subscriber's premises.

As shown in Fig. 1, the analysis device 100 may be connected directly to the subscriber coax drop line 120, or may be connected to the drop line 120 through a customer modem 130 via Ethernet or otherwise. Many of the tests performed by the test device are performed through the direct connection to the subscriber coax drop line.

In general, the communication network 110 delivers broadband RF signals to each subscriber drop line 120 that comprise a number of frequency channels, each channel having a unique carrier frequency. The carrier signal of each frequency is modulated by information, typically an audio-visual baseband signal, provided from the broadcast information source 132. The audio-visual baseband signal may be a standard analog NTSC signal, or a digital television signal.

To this end, the baseband audio-visual baseband information for each broadcast channel is modulated onto a particular channel frequency carrier and then combined with all of the other channel frequency carriers to form a multichannel broadband RF signal. The broadband RF signal is provided to the headend optical encoder/decoder 124. The headend optical encoder/decoder 124 converts the broadband RF signal to an optical signal, which then propagates through the fiber plant 114 to the nodes 126. The nodes 126 convert the optical signal *back* to a broadband RF signal and then provide the broadband RF signal to the lines of the cable plant 116. The cable plant 116, the network tap lines 118 and the subscriber drop lines 120 cooperate to provide the broadband RF signal to each subscriber premise 122. If the subscriber premise 122 has a television 128 operably connected to the drop line 120, then the television 128 may tune and display any of a plurality of audio-visual programs within the broadband RF signal.

A portion of the broadband signal is reserved for downstream and upstream data packet communication. The data packet communication in the embodiment described herein comprises data to be communicated using TCP/IP standards, and which may be communicated to remote computers 152 over the Internet 150. The CMTS 134 effectively transmits downstream data packets to cable modems 130 using known modulation techniques, and receives upstream data packets from the cable modems 130 using known demodulation techniques.

The CMTS 134 prepares upstream packets for transmission over the Internet 150 in accordance with known standards and techniques. The CMTS 134 provides the prepared upstream packets to the router 148, which in turn provides the packets to the Internet 150. The Internet 150 may then provide the data packets to one or more remote computers 152. Such data packets may include electronic mail, http requests, web page information, and any other information normally associated with Internet usage. Packets of data generated by remote computers 152 may be transmitted to a cable modem 130 of the network using a reverse path. VoIP services also use the same path.

As discussed above, the TFTP server 140, the TOD server 142 and the DHCP server 144 also perform operations in Internet communications via the CMTS 134. As is known in the art, the TFTP server 140 includes a configuration on file that defines constraints on the communication parameters for each modem 130, such as bandwidth limitations or the like. As is also known in the art, the TOD server 142 provides time-stamp information to cable modems 130 for event logging. The DHCP server 144 establishes a dynamic IP address for each modem 130 (and associated MTAs, not shown in Fig. 1) when the modem 130 attempts to connect to the Internet 150 via the CMTS 134.

As already noted, the analysis device 100 is used by a CATV service organization to analyze and determine problems within the components of the CATV system. In order to generate accurate test signals and to measure reliably the response signals of system components, the analysis device 100 must be periodically calibrated. Typically, CATV test equipment is calibrated annually, although an analysis device may be calibrated or tested to determine whether calibration is needed when readings from the device appear erroneous. With previously known calibration systems, the analysis device 100 is sent to a calibration center where calibration/verification procedure is performed, the test data logged, and then the device is returned to the CATV service organization or customer. The amount of time during which the device is unavailable to the service organization or customer can be substantial.

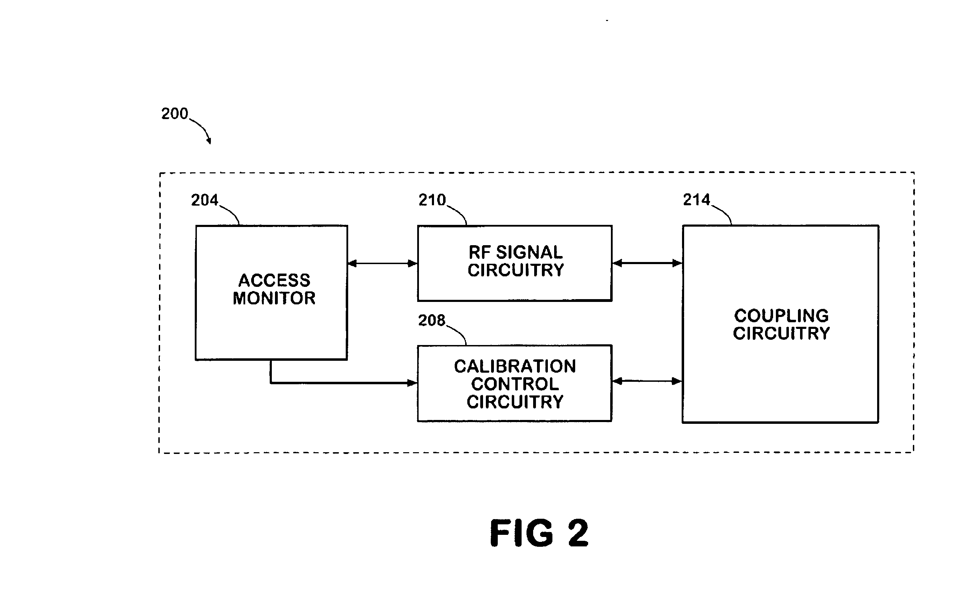

In an effort to reduce the time associated with calibrating CATV test equipment, a system and method practiced in accordance with the principles of the present invention has been developed. A calibration system 200 operating in accordance with the principles of the present invention is shown in Fig. 2. The calibration system 200 in Fig. 2 includes an access monitor 204 that is coupled to the calibration control circuitry 208. The calibration control circuitry 208 includes a processor executing programmed instructions to control the operation of the RF signal circuitry 210 and the coupling circuitry 214. The programmed instructions may be stored in memory internal to the calibration system 200 or accessed from a memory device, such as hard drive or CD ROM reader. As discussed more fully below, the access monitor 204 may include a USB port or the like for coupling with a memory device, such as a memory fob. A program stored in such a device may be downloaded and stored in the calibration system 200 for later execution. In this manner, the operation of the calibration system 200 may be modified or additional features added.

The calibration system 200 may be implemented on a personal computer platform or the like. For example, the system 200 may be implemented on a computer having a Pentium 4 processor running at 1.8 GHz and also having a 60 GB hard drive, a CD ROM drive, and a USB port. Such a system also typically includes a display device, such as a conventional monitor or flat screen. The system resources may be managed by an operating system, such as the Windows operating system available from Microsoft Corporation of Redmond, Washington. The access monitor 204 and the calibration control circuitry may be implemented using the components of the above-described computer system or the like.

The coupling circuitry 214 provides the necessary signal conditioning and interfaces for coupling a variety of CATV test meters and components to the calibration system 200. The coupling circuitry 214 couples RF signals from the RF circuitry 210 to the test equipment for calibration. The response signals from the test equipment are also coupled to the RF circuitry 210 by the coupling circuitry 214 for measurement and/or evaluation. The RF circuitry 208 is operably coupled to receive signals to be measured from the coupling circuitry 214. As is known in the art, the coupling circuitry 214 may include a tuner and/or filtering devices for broadband RF signals that may be digital or analog modulated RF television signals. The calibration control circuitry 208 provides the RF signal circuitry with the parameters for a sequence of RF signals at particular frequencies and signal levels for a calibration procedure that has been selected by a user of the system 200. The calibration control circuitry 208 also receives signals from the coupling circuitry 214 for verifying that the test equipment has been correctly coupled to the calibration system 200.

The access monitor 204 enables the system 200 to be located at a CATV service organization without unauthorized calibrations occurring. The access monitor requires a user to identify an account or security key having sufficient credits associated with it before it will enable the calibration control circuitry 208 to perform a calibration procedure on a test meter coupled to the system 200 through the coupling circuitry 214. To communicate measurements and diagnostic data, the calibration system 200 also preferably includes a display, as noted above with reference to the computer system example that may be used to implement the system 200. The display is preferably a user-readable display for displaying analysis information. The display may also be employed to illustrate user options or choices. In some embodiments, the display may incorporate touch screen technology to allow input to the system 200 directly through the display. In such a case, the display would also comprise a portion of the access monitor 204. The display may suitably be an LCD display, a cathoderay tube display, a plasma display, or other type of display. Input circuitry for the access monitor may also include a keyboard, a computer mouse, or a touch screen. In alternative embodiments, other elements that provide output in human-perceivable forms, such as audio systems or the like, may be used instead of, or in addition to, the display.

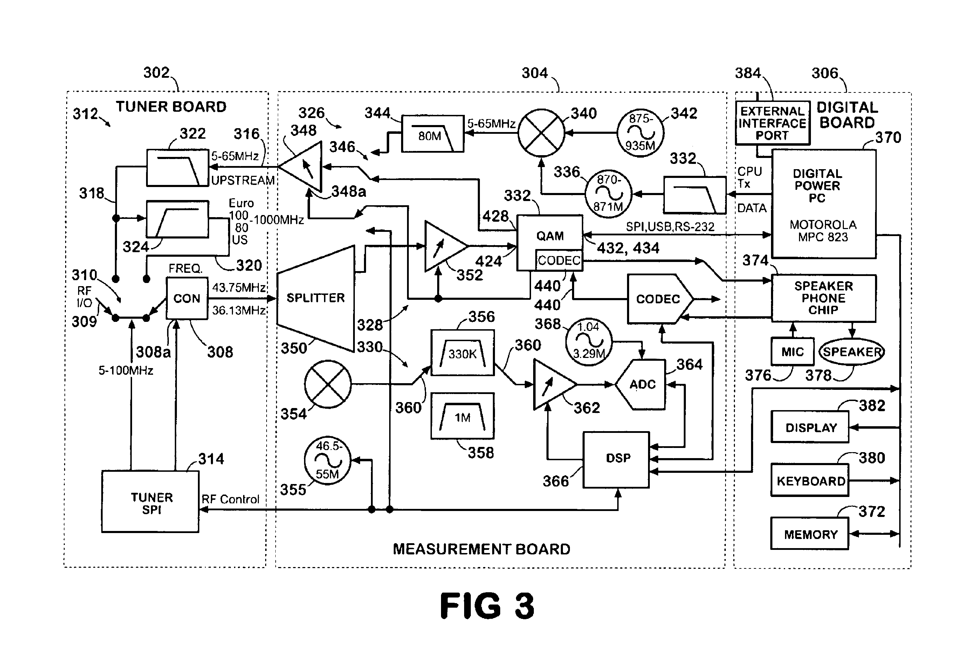

Fig. 3 shows in further detail an exemplary embodiment of a test device 300 that includes the functionality of the device 100 of Fig. 1 integrated with other test functions. As shown in Fig. 3, the device 300 is roughly divided into a tuner circuit 302, a measurement circuit 304, and a control/interface circuit 306. The tuner circuit 302 is a circuit that, in general, obtains a select RF channel frequency that contains either analog broadcast information, digital broadcast information, and/ or internet protocol data packets. The measurement board 304 is a board that performs a plurality of measurement operations on the select RF channel frequency. The control/interface circuit 306 presents the results of the measurement operations to a display, and further allows a user to select which of the plurality of measurement operations the user desires the device 300 to perform. In the exemplary embodiment described herein, the control/interface circuit 306 further allows the user to obtain and display Internet web pages.

The tuner circuit includes a frequency conversion circuit 308, an input 309, an RF switch 310, a diplexer 312 and a control interface 314. The frequency conversion circuit 308 is a circuit that converts the frequency of an incoming broadband signal such that a select channel frequency of between 4 and 1000 MHz is centered about a predetermined intermediate frequency (IF). In U.S. applications, the predetermined IF is preferably 43.75 MHz. In European applications, the predetermined IF is preferably 36.13 MHz. Suitable frequency conversion circuits are well known. A typical frequency conversion circuit will include, among other things, two mixers and two local oscillators, not shown configured in a manner well known in the art. The frequency conversion input 308 includes a control input 308a that receives control signals that identify the frequency band that is to be centered about the IF.

The RF input 309 is operably connectable to a termination of a cable network, preferably a coaxial cable termination of a communication network. Thus, for example, the RF input 309 would connect to the subscriber drop line 120 of Fig. 1. The RF input 309 is operable to receive broadband RF signals having a broadband spectrum of at least between 5 MHz and 1000 MHz.

The diplexer 312 is a circuit that is operable to provide bidirectional signals on the same signal line 318 to and from the RF input 309. The bidirectional signals include upstream signals generated within the device 300 and downstream signals received from the RF input 309. The diplexer 312 includes an upstream input 316, a shared signal line 318, a downstream output 320, an upstream filter 322 and a downstream filter 324. The upstream input 316 is coupled to an output amplifier 348 of the measurement circuit 304, discussed further below, from which it receives upstream RF signals that include data packets. The upstream input 316 is further connected to the upstream filter 322.

The upstream filter 322 and the downstream filter 324 are configured to have nonoverlapping passbands, the upstream filter 322 having a passband that includes the RF frequency band of all upstream digital data packet channels and the downstream filter 324 having a passband that includes the RF frequency band of all downstream digital data packet channels. In accordance with CableLabs and tComLabs standards for HFC networks, the upstream filter 322 is configured to pass RF signals within the frequency band of 5 MHz to 42 MHz for DOCSIS and 5 MHz to 65MHz for Euro DOCSIS, while blocking RF signals within the frequency band of about 88 MHz or 108 to 860 or 862 MHz. Similarly, the downstream filter 324 is configured to pass RF signals within the frequency band 88 MHz to 860 MHz (108 MHz to 862 MHz in Europe) and block signals within the band of approximately 5 MHz and 42 or 65 MHz.

To accomplish the foregoing, it will be appreciated that the upstream filter 322 may suitably be a low pass filter with a cut-off frequency in the vicinity of about 55-70 MHz, and the downstream filter 324 may be high pass filter with a cut-off frequency in the vicinity of 75-80 MHz.

In any event, the upstream filter 322 is disposed between the shared signal line 318 and the upstream input 316. The RF switch 310 is preferably a double pole, double throw switch that has a first position and a second position. In the first position, the RF switch 310 connects the RF input 309 directly to the frequency conversion circuit 308. In the second position, the RF switch 310 connects the RF input 309 to the shared signal line 318, and connects the downstream output 320 to the frequency conversion circuit 308.

The control interface 314 is an interface circuit, such as a serial/parallel interface (SPI) circuit that receives control signals relating to the operation of the tuning circuit 302 and includes the logic to provide the signals to the controlled devices within the tuning circuit 302. In general, the control interface 314 receives signals that control the frequency conversion circuit 308 and the RF switch 310. Responsive to such signals, the control interface 314 provides signals to the control input 308a that causes the frequency conversion circuit 308 to tune to a specified frequency channel, and/or causes the RF switch 310 to be in a select one of the first and second positions. In the embodiment described herein, the control interface 314 is operably connected to receive control signals from the SLM digital signal processor 366 of the measurement circuit 304, discussed further below.

The measurement circuit 304 is a circuit that performs or at least plays a significant role in the measurement operations of the device 300. In the embodiment of Fig. 3, the measurement circuit 304 performs analog television signal level measurement, digital signal level measurement, MER, BER measurements, DOCSIS measurements and cooperates with the control processor 370 of the control/interface circuit 306 to perform throughput and packet loss measurements. It will be appreciated that the measurement circuit 304 (alone or in combination with other circuits) may be configured to perform a different set of tests that includes at least some of the above mentioned tests, as well as others.

The measurement circuit 304 is further roughly divided into three circuits, some of which share components. In particular, the measurement circuit 304 includes a digital transmission circuit 326, a digital measurement circuit 328 and a signal level measurement circuit 330. In general, the digital transmission circuit 326 is operable to generate upstream RF signals for transmission onto the network attached to the RF input 309, the digital measurement circuit 328 is operable to receive RF signals modulated by digital baseband signals and perform various channel quality tests thereon, and the signal level measurement circuit 330 is operable to obtain a measurement of the strength of the received signal, regardless of whether it is modulated with digital information or analog information. In addition to tests performed within the digital measurement circuit 328 and the signal level measurement circuit 330, the digital transmission circuit 326 and the digital measurement circuit 328 cooperate to communicate digital data packets between the network under test and the processor 370 of the control/interface circuit 306. The processor 370 may use digital packet communication (e.g. Ethernet packets) in the performance of additional tests or measurements.

The digital transmission circuit 326 includes dual output paths. The first path is a modem circuit 332 that is connected to receive, among other things, data to be transmitted from the control processor 370, the SLM DSP 366, and a microphone 376 in the control/interface circuit 306. The first path is generally used for DOCSIS and VoIP testing.

The second path is a frequency modulation circuit that includes a first filter 334, a first oscillator 336, a mixer 340, a second oscillator 342, and an output filter 344. The second path may be used to communicate telemetry and other communication signals from the control processor 370 to a device connected to the network under test. Telemetry signals may be used to communicate details regarding SLM measurements performed on analog or digital channel frequencies.

Referring specifically to the second output path, the first filter 334 is connected to receive data to be transmitted form the control processor 370, and is further connected to an input of the first oscillator 336. The output of the oscillator 336 is connected to one input of the mixer 340, and the output of the second oscillator 342 is connected to the other input of the mixer 340. The output of the mixer is provided to the output filter 344.

The outputs of the output filter 344 and the modem circuit 332 are connected to selectable inputs of an output RF switch 346. The RF switch 346 is controllable to provide a select connection to either the output filter 344 or the modem circuit 332. The output of the RF switch 346 is connected to a signal input of the output amplifier 348. The output amplifier 348 includes a control input 348a connected to the modem circuit 332. The control input 348a is used to adjust the amplification level provided by the output amplifier 348.

The first oscillator 336 in the embodiment described herein has an output frequency of between 870 and 871 MHz, dependent upon the signal received from the control processor 370 (or DSP 366). Thus, the output of the first oscillator 336 is a frequency modulated signal centered about approximately 870.5 MHz. The second oscillator 342 provides a select carrier frequency signal of between 875.5 to 935.5 MHz. The output frequency of the second oscillator 342 may suitably be controlled by the control processor 370 or the DSP 366. The mixer 340 receives and mixes signals from the second oscillator 342 and the first oscillator 336 to produce, among other things, a beat product that is the frequency modulated signal centered around a carrier frequency of between 5 and 65 MHz, depending on the output frequency of the second oscillator 342. The output filter 344 removes high frequency components of the mixed signal and provides the output FM signal to the switch 346.

Referring to the first output path, the modem circuit 332 employs QPSK or QAM to modulate digital information onto RF signals having a carrier frequency of between 5 and 65 MHz. To this end, the modem circuit 332 may include any DOCSIS modem. A suitable modem circuit 332 is the BCM3352 integrated circuit available from Broadcom. Referring again generally to Fig. 3, the output path through the modem circuit 332 is generally used to transmit packet data that is intended for the Internet or a similar type network. The modem circuit 332 may be used to convert voice data received to from the control/interface circuit 306 to packet data for transmission using VoIP protocols. The modem circuit 332 may also be used to convert digital information generated by the control processor 370 to packet data for transmission using other Internet standard protocols.

The receiver circuit 328 and the signal level measurement circuit 330 are both connected to the frequency conversion circuit 308 of the tuner circuit 302 through a splitter 350. The receiver circuit 328 includes a gain adjustment amplifier 352 and the modem circuit 332. The modem circuit 332 is operable to receive Internet protocol packets (VoIP or otherwise) and provide output to various devices on the control/interface circuit 306. In one mode (VoIP mode), the modem circuit receives VoIP protocol data packets and provides analog voice signals to the speaker phone chip 374 of the control/interface circuit 306. In another mode, the modem circuit receives IP data packets and provides the packets to the control processor 370 of the control/interface circuit 306. In still another mode, the modem circuit 332 provides BER, MER, packet loss, delay (latency) and jitter information to the control processor 370, as will be discussed further below. Thus the modem circuit 332 enables reception of VoIP packets, the reception of other non-VoIP Internet data packets, *and* the performance of various measurements, including BER, MER, packet loss, delay and jitter measurements.

The signal level measurement circuit 330 includes an SLM mixer 354, an SLM oscillator 355, a first measurement filter 356, a second measurement filter 358, a filter switch 360, a gain control amplifier 362, an analog to digital converter (ADC) 364, a digital signal processor (DSP) 366, and a variable ADC clock circuit 368.

The SLM mixer 354 and SLM oscillator 355 cooperate to further convert in incoming IF signal such that a frequency band of interest is centered around a particular measurement IF. While the frequency conversion circuit 308 of the tuner circuit 302 is configured to convert the broadband signal such that a particular *channel* is centered around an IF frequency, the SLM mixer 354 and SLM oscillator 355 convert the signal such that a particular 330 kHz band of the channel signal is centered around a select IF.

The filter switch 360 effectively routs the measurement IF signal to one of the first filter 356 and the second filter 358. The filter switch 360 typically routes the measurement IF signal through the first filter 356. The first filter 356 is a 330 kHz band pass filter centered at the center of the measurement IF band. Thus, the first filter 356 produces an output signal that is 330 kHz wide, which constitutes a select portion of the channel selected by the tuner circuit 302.

The gain adjustment amplifier 362 is configured to provide a variable amount of gain to the filtered IF signal produced by the first filter 356. The gain adjustment amplifier 362 includes a control input 362a in which it receives a gain control signal from the DSP 366, as discussed further below. The gain adjustment amplifier 362 is operably connected to provide its output signal to the ADC 364. The ADC 364 is operable to generate digital samples of the filtered and gain-adjusted IF signal and provide those samples to the DSP 366. Such ADCs are known. The ADC 364 should be able to sample at rates between 1.04 and 3.29 million of samples per second. The ADC clocking circuit 368 provides the clock signal that controls the sampling rate of the ADC 364 based on the input signal being sampled. The ADC clocking circuit 368, controlled by the DSP 366 and/or the control processor 370, is adjustable so that the highest sampling rate is used primarily *only* when needed, for example, because of the resolution required by the particular test. A lower resolution is used otherwise in order to conserve system resources.

The DSP 366 is operable to generate measurement information from a number of digital samples received from the ADC 364. The DSP 366 performs a different measurement information generating procedure dependent upon whether the received channel is a digital information channel or an analog signal channel. The DSP 366 further controls the operations of the tuner 302, the SLM oscillator 355 and the gain adjustment amplifier 362.

The DSP 366 controls the tuner 302 to provide the controls the select the channel to be "tuned to", or in other words, the channel frequency that will be converted by the frequency conversion circuit 308 to be centered about the IF. The DSP 366 controls the SLM oscillator 355 to select the portion of the channel that will be measured. In particular, to obtain signal level measurements on a digital channel, several 330 kHz bands of the channel are measured, and then the overall signal level of the channel may be estimated.

The DSP 366 controls the gain adjustment amplifier 362 such that the samples provided to the ADC 364 are within a desired quantization range of the ADC 364. In particular, low magnitude signals receive more gain than high magnitude signals, such that the analog signal provide to the ADC 364 is roughly normalized to be within the preferred operating range of the ADC 364. The DSP 366 uses the amplification value in the calculation of the signal level measurement.

The DSP 366 is operable to receive control signals from the control processor 370 that direct the DSP 366 as to which measurement task to perform. For each measurement task, the DSP 366 performs an associated set of operations. The DSP 366 has different sets of operations for performing, among other things, a single analog channel SLM, a single digital channel SLM, and a multi-channel sweep SLM. The DSP 366 further generates control signals for various elements in the measurement circuit 304 as well as the tuner circuit 302.

Referring now to the control/interface circuit 306, the control/interface circuit 306 is generally operable to allow a technician to select from a plurality of measurement operations, and further provides human perceptible output derived from the measurement operations. To this end, the control/interface circuit 302 in the embodiment described herein includes a control processor 370, a memory 372, a speaker phone circuit 374, a microphone 376, a speaker 378, a keypad 380, a display 382 and an external interface port 384.

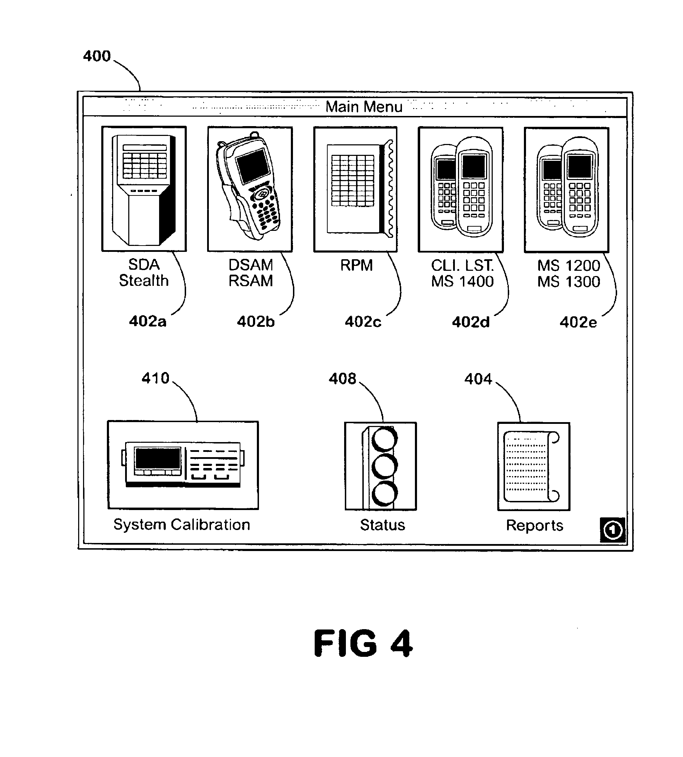

The control processor 370 is a processing circuit that includes a microprocessor, digital signal processor, microcontroller, or other processing circuit operable to carry out the operations described herein. In the embodiment described herein, the control processor 370 may suitably include a model PowerPC microprocessor, available from Motorola Corporation. Regardless of the form of the processing circuit, the control processor 370 is operably connected to each of the memory 372, the keypad 380, the display 382, the external interface port 384, modem circuit 332, and the DSP 366. The control processor 370 is operable to perform the operations attributed to it in this description, particularly as discussed further below in connection with Figs. 4-11.

The memory 372 may suitably be a combination of random access memory (RAM), programmable read-only memory (PROM), flash memory, etc. The memory 372 contains the program code executed by the control processor 370, and may be used to store user preferences, to store test measurement results, and for local calculations.

The display 382 is a device operable to display measurement results, and is further operable to display web pages received via the receiver circuit 328 from the external HFC. To this end, the controller processor 370 includes a light client interface, for example a web browser, that is operable to receive graphic data files that include a mark-up language rendering instructions, such as HTML, XML or other mark-up language, and interpret the mark-up language in the graphic data files to provide a display based thereon. As is known in the art, a mark-up language is a machine independent, data-presentation protocol that allows graphics (including text) to be rendered in a similar manner on a variety of displays and a variety of platforms. Thus, the control processor 370 employs a web browser (or other light client interface) to interpret received graphic files and cause the files to be rendered in a coherent manner on the display 382.

To facilitate ease of use in a handheld device, the display 382 is preferably a relatively small display, less than about sixteen square inches. At present, the display 382 is preferably an LCD display having 320 x 240 pixels, and has a diagonal dimension of 3.8 inches. LCD displays balance the needs of compactness, cost-efficiency and power efficiency.

The keypad 380 may be an alphanumeric keypad, or other collection of pushbutton actuators in which numbers and/or letters may be entered. The keypad 380 preferably includes arrow keys (for moving a cursor or selecting from displayed items). In some cases, a combination of specialized function keys and arrow keys will be sufficient. In general, the keypad 380 at a minimum allows the user to select from a plurality of tests to be performed. The keypad 380 preferably also includes at least numeric keys will allow the entry of particular channel or frequency numbers at which measurements are to be taken. The external interface port 384 of the device 300 may be used for local and remote communications through the processing circuit 370.

The speaker phone chip 374 performs audio duplexing, feedback suppression, amplification and other operations normally associated with speaker-telephones. The speaker phone chip 374, which is suitably an MC34018DW integrated circuit package available from Motorola Corporation, is operable to receive analog audio signals from the modem circuit 332 and provide amplified analog signals to the speaker 378. The speaker phone chip 374 is further operable to bias the microphone 376 and receive microphone signals therefrom. The speaker phone chip 374 is operable to provide the microphone signals to the modem circuit 332.

The operations of the control processor 370 are described below in connection with various operations of the device 300. In general, the user may select, via the keypad 380, one of a number of operations, including but not limited to, analog channel SLM, digital channel SLM, analog channel sweep, digital channel sweep, analog channel sweep, digital channel MERBER quality measurements, HFC system throughput and ping testing, and VoIP delay, packet loss and jitter testing.

Various embodiments of test meters having circuitry similar to that shown in Fig. 3 may be used to perform analog signal level measurements, digital signal level measurements, sweep measurements, digital channel measurements, and the like. To ensure that the measurements obtained from these various devices remain reliable, the meters need to be calibrated. When the system 200 is installed at a CATV service organization and calibration credits have been purchased for operation of the system, the system may be used to calibrate test meters without requiring the meters to be sent to another location. Once the system 200 is installed and credits purchased, the system may be powered up.

An exemplary main menu window displayed and used to operate the system 200 is shown in Fig. 4. The main menu window 400 may display meter icons 402a, 402b, 402c, 402d, and 402e, a calibration report icon 404, a system status icon 408, and a system calibration icon 410. The system calibration icon may be selected for performing an internal calibration procedure for the system 200. The system status icon 408 may be selected to review status parameters for the system 200. The reports icon 404 may be selected to see a list of calibration reports for meters that have been calibrated by the system 200. One of the meter icons 400a, 400b, 400c, 400d, or 400e may be selected to perform a calibration procedure for the corresponding meter.

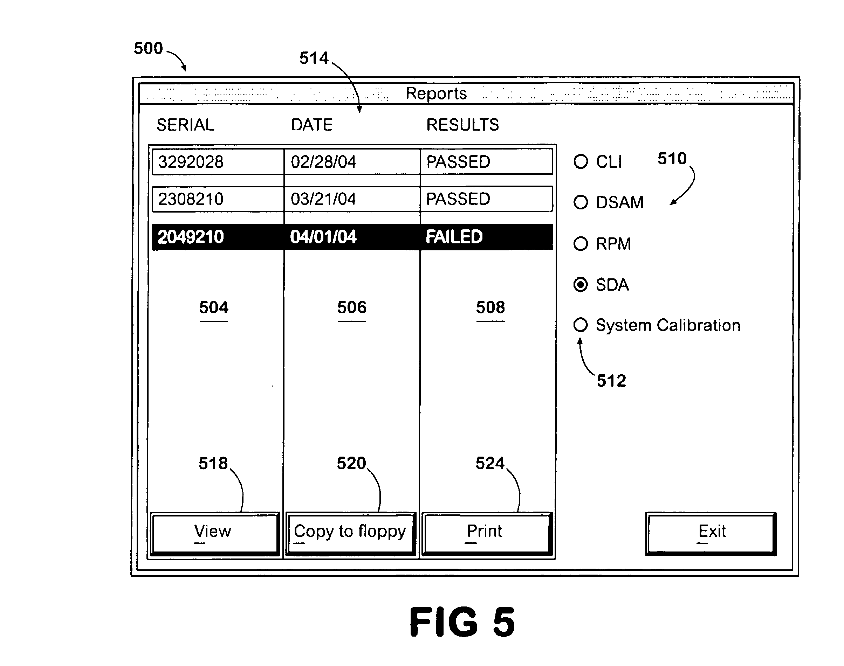

If the calibration report icon 404 is selected, then an exemplary display, such as the one depicted in Fig. 5, appears. The report window 500 may be arranged in a three column format to list the serial numbers of meters calibrated 504, the date of the calibration report 506, and the pass/fail results 508 of the calibration/verification procedure. Meter types 510 are provided in the window 500 with an activation button 512 next to each type. A meter type may be activated by clicking on the activation button 512. All of the calibration reports stored in the system 200 for the activated type of meter are then displayed in the report listing portion 514 of the window 500.

To view a report, the cursor is navigated over a report line in the report listing portion 514 of the window 500 and a mouse may be clicked to highlight a report line. Moving the cursor to the view button 518 causes the corresponding calibration report to be displayed. Clicking on the copy button 520 causes the system to store a copy of the calibration report on an external memory device, such as a floppy disk, a CD ROM, or other read/write memory device. Clicking on the print button 524 causes a copy of the calibration report to be printed on a printer associated with the system 200.

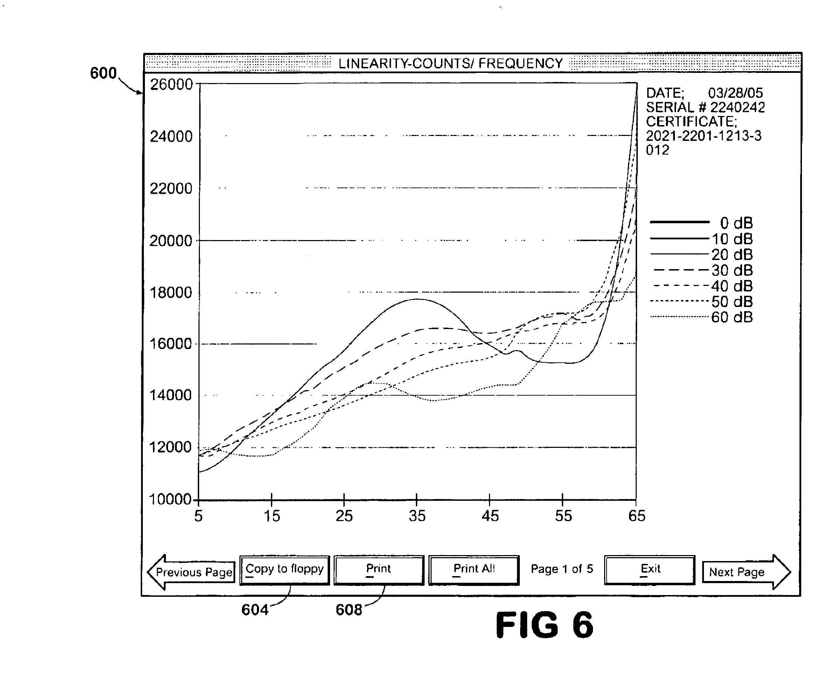

An example of a calibration report is shown in Fig. 6. There, the signal level measurements for various test signals obtained by the calibrated meter are shown in the window 600. From this depiction a technician or system engineer can determine whether the meter was properly calibrated. This graphical presentation may be copied to an external memory device or printed by clicking on the copy button 604 and print button 608, respectively.

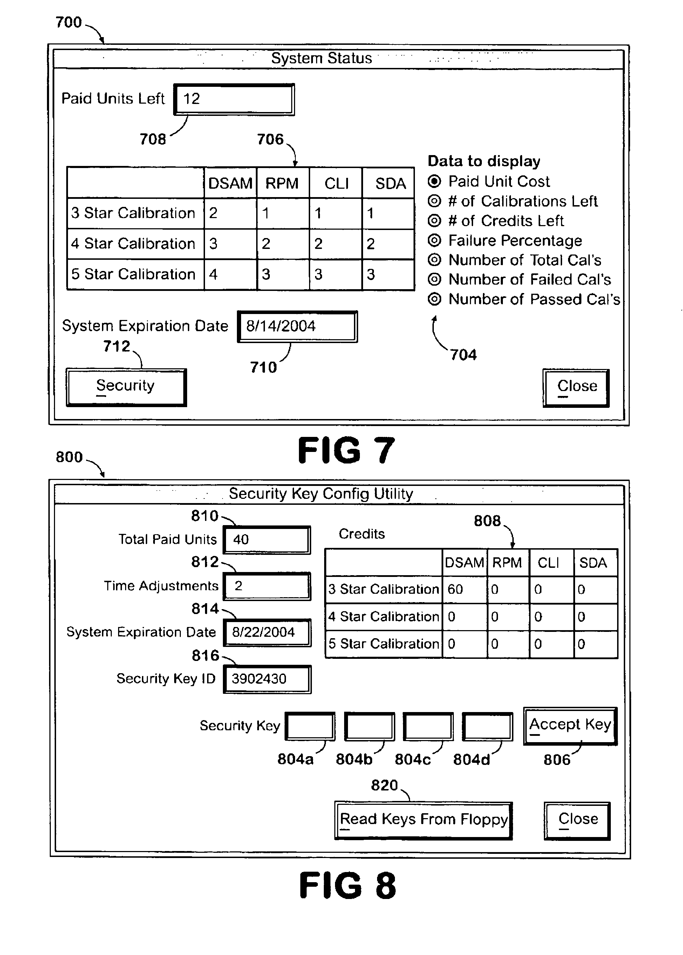

If the system status icon 408 is selected from the main menu shown in Fig. 4, then a status window 700, such as the one shown in Fig. 7, may be displayed. The various types of data that may be displayed in the status window 700 are listed in the data type area 704. Next to each data type is an activation button that works in a manner similar to that describe above for the meter types. In the figure, the paid unit cost has been activated. In the data display window 706, the data are arranged in a matrix. Each column is associated with a particular meter type while each row is associated with a particular type of calibration procedure. The exemplary display in Fig. 7 shows three types of calibration procedures that are denoted as 3 star, 4 star, or 5 star calibration procedures. Other procedure names and other numbers of procedures, rather than the three procedures shown in the figure, may be included in the data display window 706. Likewise, other meter types may be included. The data displayed in Fig. 7 depict the number of calibrations that have been performed for each meter type. Above the data window 706 is a credit remaining window 708. This window gives the user an idea of how many more calibrations may be performed by the system. Of course, the user could activate the calibration remaining data type and the data window would display the number of calibrations for each meter type that could be performed with the remaining calibration credits. Below the window 706 is a system expiration window 710 that displays the date on which the system 200 expires. This date indicates the date after which the system 200 will be removed from the service organization site if the lease for the system is not renewed or the date after which the system will become inoperable. In the lower left corner of the window 700, a security button 712 is displayed.

If the security button 712 is activated, a security key window, such as the window 800 shown in Fig. 8, is displayed. Along the bottom of the window 800 shown in Fig. 8 are four input boxes 804a, 804b, 804c, and 804d for receiving the digits of a security key. In the window shown in Fig. 8, each input box accepts four hexadecimal digits so that the length of the security key is sixteen digits or 64 bits. Of course, other key lengths may be used. Once the digits are entered in the input boxes, the accept key button 806 may be activated by clicking a mouse, for example, and the access monitor determines whether the security key corresponds to an authorized account on the system 200. If it is, the data matrix 808 is populated with the calibration credits associated with the corresponding account. The data matrix 808 has columns that correspond to the various meter types for which calibration credits may be used and the row correspond to the types of calibration procedures that may be performed on the meters. In the exemplary matrix 808 shown in Fig. 8, sixty calibration credits are available for DSAM meter calibrations of the three star calibration type. The data windows on the left side of the window contain data associated with the accepted security key. In the example shown in Fig. 8, these data windows include a window 810 showing the total paid units for the account, a window 812 showing the number of time adjustments for this account, a window 814 showing the system expiration date, and a window 816 showing the identification number for the key. The security key identification number is a number for the account corresponding to the security key, which acts as a password for the account. As used herein, the term "paid units" refers to payment credits that may be exchanged for any service performed by the automatic test equipment, while "credits" refer to a service that is specific to an individual meter or calibration type. Credits may be used to encourage a user to try a particular meter and/or service. Paid units may be applied to any type of meter or service available on the system. "Time adjustments" refers to system clock alterations. Time adjustments are tracked to determine whether a user is attempting to turn system time back to an operable period as it nears or passes an expiration date. The read keys button 820 may be activated to read a security key from a memory device or downloaded and installed in a file stored in the computer on which the system 200 is implemented has a floppy drive. For example, activating the read key button 820 may cause the access monitor 204 to read a memory fob coupled to a communication port, such as a USB port or the like, or a CD ROM may be read by a CD ROM drive, to provide a security key.

The account data are stored internally in the system 200 and are input to the system 200 at the time that the system 200 is prepared for installation at the CATV service organization site. That is, the CATV service organization prepays for a number of calibrations of a particular type or for particular types of meters. Alternatively, the organization prepays for a number of calibration credits that may be used different types of meters and different types of calibrations. In this scenario, the access monitor determines the number of credits required for a requested calibration and updates the account data to deduct for the appropriate number of credits.

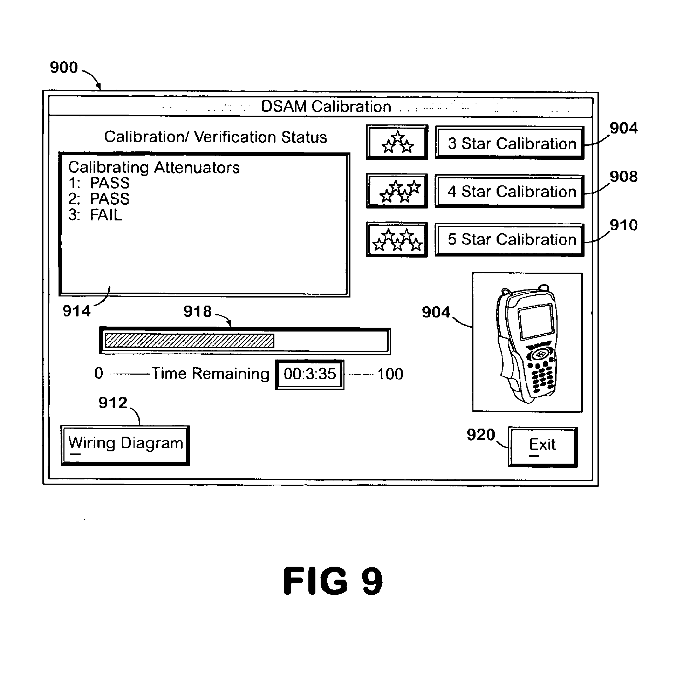

If a user selects one of the meters displayed on the main menu of Fig. 2, the access monitor determines whether the user has identified an account by entering a security key in the window 800 as discussed above. If an account has been previously identified, a window, such as window 900 in Fig. 9, appears. The exemplary window 900 is for a DSAM meter calibration. An icon 904 representing the meter being calibrated or verified allows the user to confirm that the right type of meter calibration/verification is being performed. The user may then select one of the calibration procedures displayed. In the example shown in Fig. 9, the user has three choices and may select a three star, four star, or five star calibration procedure for the displayed meter or device. Different procedures for different devices may be displayed. Once a user activates a calibration procedure for a device by activating one of the buttons 904, 908, or 910, the procedure begins.

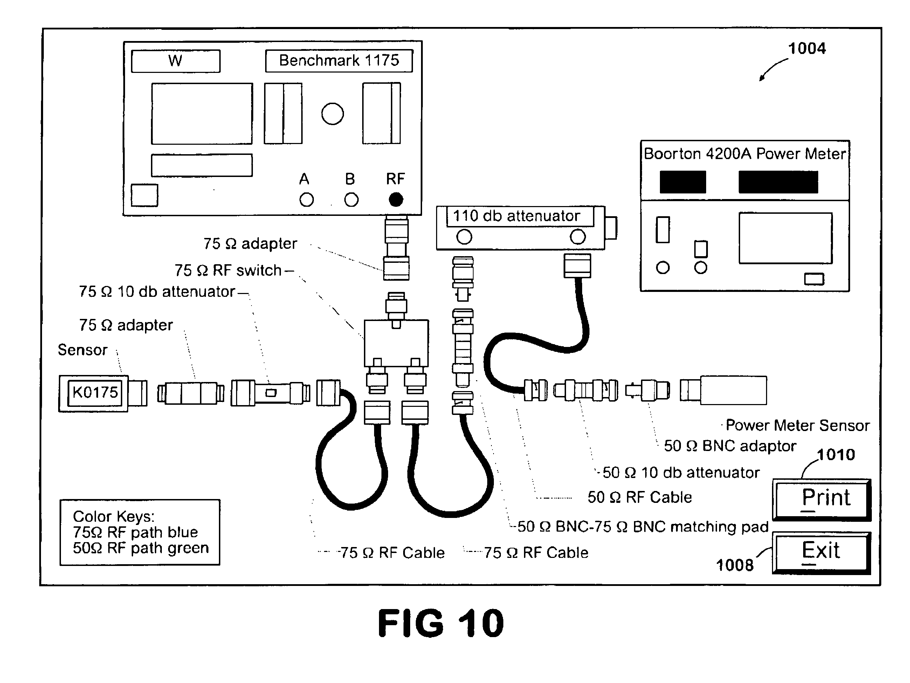

Prior to activating the procedure, the user couples the meter to the system 200 for the calibration/verification procedure. The user may verify the test setup by activating the wiring diagram button 912 so the test setup is displayed. An exemplary display of a calibration/verification setup window 1004 is shown in Fig. 10. To print a copy of the test setup so that the user may later reference it, the print button 1010 may be activated. In response to the user activating the exit button 1008, the access monitor regenerates the display window 900 so the user may activate the calibration/verification procedure. Once the calibration/verification procedure is commenced, the status of the procedure may be viewed in the window 914 while the time bar 918 changes to indicate the progress of the procedure. When the window indicates the procedure is complete, the user activates the exit button 920 to return to the main menu.

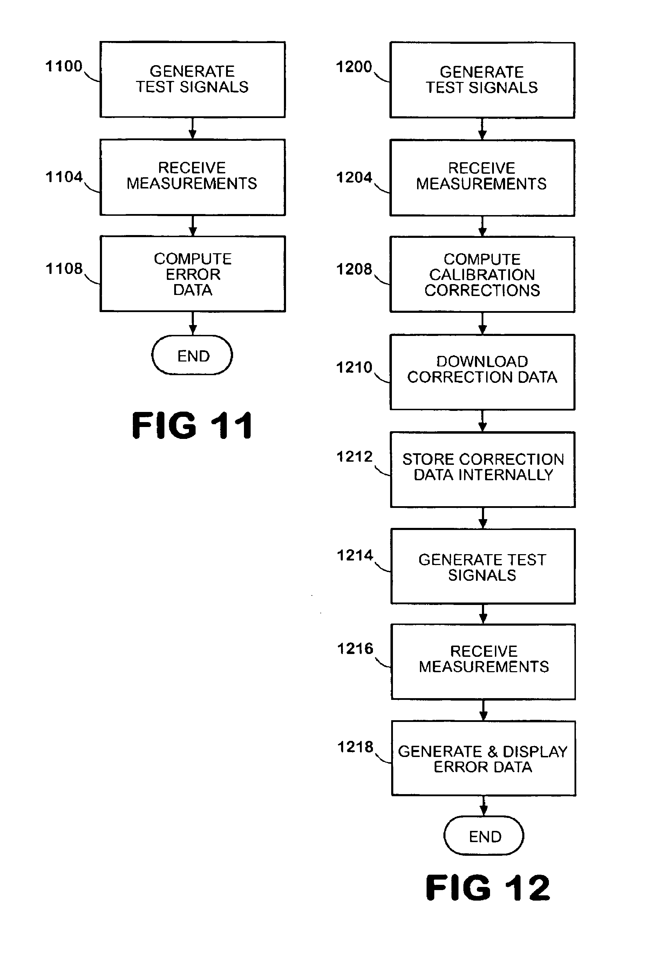

In one embodiment of the present invention, three calibration procedures may be performed by the system 200. These procedures have been previously denoted above as a three star calibration procedure, a four star calibration procedure, and a five star calibration procedure. A flow diagram for a three star calibration procedure is shown in Fig. 11. That procedure begins with the system 200 generating test signals for the test meter coupled to the system (block 1100). The test signals may be generated at different amplitudes and frequencies. Several hundred signals may be generated for a test meter. The measurements of the test signals generated by the test meter are received by the system 200 (block 1104). The calibration control circuitry 208 determines measurement error data from the received measurements and displays these data (block 1108). The user may then determine from these error data whether a four or five star calibration procedure is required to correct the test meter.

A flow diagram for a four star calibration procedure is shown in Fig. 12. That procedure begins with the system 200 generating test signals for the test meter coupled to the system (block 1200) in a manner similar to that described above with regard to Fig. 11. The measurements of the test signals generated by the test meter are received by the system 200 (block 1204). The calibration control circuitry 208 develops calibration correction tables from the received measurements (block 1208). The calibration correction data are downloaded and stored in the test meter (block 1210) as well as being stored in the system 200 in association with a unique identifier for the test meter (block 1212), such as a serial number. The test signals are generated again and applied to the test meter (block 1214) and the measurements generated by the test meter are received from the meter (block 1216) and used by the calibration control circuitry to determine the new error data for the test meter, which is displayed (block 1218). The user may then determine whether the reiterative five star procedure is required to determine whether the meter can be brought into calibration standards.

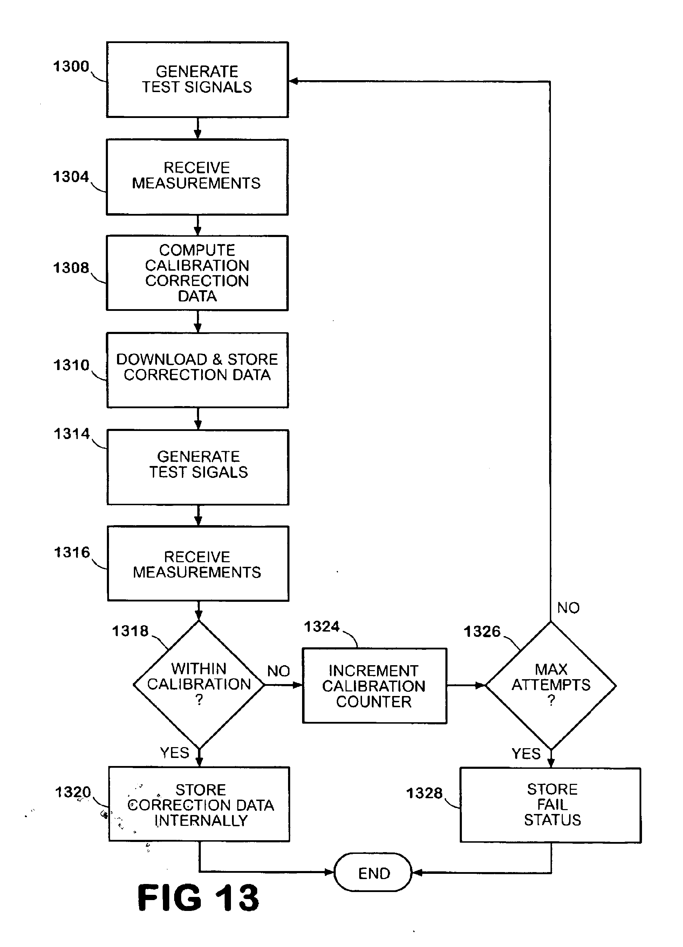

A flow diagram for a five star calibration procedure is shown in Fig. 13. That procedure begins with the system 200 generating test signals for the test meter coupled to the system (block 1300). The test signals may be generated at different amplitudes and frequencies. Several hundred signals may be generated for a test meter. The measurements of the test signals generated by the test meter are received by the system 200 (block 1304). The calibration control circuitry 208 develops calibration correction tables from the received measurements (block 1308). The calibration correction data are downloaded and stored in the test meter (block 1310). The test signals are generated again and applied to the test meter (block 1314) and the measurements generated by the test meter are received (block 1316) and used by the calibration control circuitry to determine whether the measurements are within the calibration standards (block 1318). If they are, the calibration correction data are stored in association with the serial number or other identifier of the test meter (block 1320). Otherwise, a calibration attempt counter is incremented (block 1324) and evaluated to determine whether a maximum number of attempts have been made (block 1326). If the maximum number of attempts has not been performed, the process continues with new calibration correction data being calculated and downloaded to the meter (blocks 1308 and 1310). Verification is repeated (blocks 1314-1318) until the calibration is confirmed (block 1320) or the maximum calibration attempts have been tried (block 1326). If the maximum number of attempts has been performed without successful calibration of the test meter, then the calibration status for the test meter is stored as a failed status (block 1328).

Calibration correction data are determined for linearity corrections and for level corrections. To determine the linearity corrections, the amplitude of the test signal is increased while the frequency of the signal remains fixed. To determine the level corrections, the amplitude of the test remains fixed while the frequency of the signal is swept over a frequency range. Typically, the level correction data are expressed as a percentage of the linearity data. Additionally, measurements specific to the type of meter being calibrated may be performed and correction data developed for these measurements that are also expressed as a percentage of the linearity or level correction data.

In operation, a CATV service organization typically signs a lease agreement with a calibration center for the installation of the system 200 at the CATV service organization site. The service organization prepays for calibration credits and receives a token with a security key stored therein. The system 200 has account data stored in its internal memory that contains the security key or keys that may be used to verify access to the account calibration credits as well as the calibration credit data. Thereafter, a user at the CATV organization site may activate the system 200 and present the token to the access monitor. The access monitor verifies that the security key stored in the token is associated with the account data stored in the system 200. The user may then request a calibration procedure for a test meter coupled to the system 200. The access monitor determines that an appropriate number of credits are stored in the system 200 for the requested procedure and, if the credits are available, enable the calibration control circuitry to perform the procedure. The account data is updated by the access monitor to deduct for the performance of the requested calibration and the procedure is performed by the system. If further action is required, then the user may request it and the procedure may be performed if sufficient credits are available. Once the calibration/verification is finished or insufficient credits remain for further procedures, the system 200 terminates user access to the system. The test meter may then be de-coupled from the system.

It will be appreciated that the above described embodiments are merely exemplary, and that those of ordinary skill in the art may readily devise their own implementations and adaptations that incorporate the principles of the present invention and fall within the spirit and scope thereof.

## Claims

1. An apparatus comprising:
a calibration unit for calibrating a signal level measurement circuit that is operable to generate signal level measurements for a set of broadband RF signals; and
an access monitor for enabling operation of the calibration unit in response to a token indicative of calibration credits being coupled to the access monitor.

2. The apparatus of claim 1, the access monitor further comprising:
a port for receiving a token containing calibration credit data.

3. The apparatus of claim 2 wherein the port is a communication port coupled to a memory fob interrogator and modifier for receiving calibration credit data from the memory fob and updating the calibration data in the memory fob.

4. The apparatus of claim 1, the access monitor further comprising:
a smart card reader for interrogating and updating a smart card containing calibration credit data.

5. The apparatus of claim 1, the access monitor further comprising:
a calibration procedure signal generator for generating a signal that enables the calibration unit to perform a calibration procedure on a signal level measurement circuit coupled to the calibration unit.

6. The apparatus of claim 5, the calibration procedure signal generator generating a signal that enables the calibration unit to perform one of a plurality of calibration procedures on a signal level measurement circuit coupled to the calibration unit.

7. A method for calibrating a signal level measurement circuit comprising:
determining whether a token indicates a calibration credit is available for a requested calibration of a signal level measurement circuit; and
enabling operation of calibration unit for performing the requested calibration in response to the token being determined to indicate a calibration credit is available for the requested calibration.

8. The method of claim 7 further comprising:
receiving calibration credit data from a token.

9. The method of claim 8, the calibration credit data reception further comprising:
coupling a memory device to a calibration unit for receiving calibration credit data from the memory device;
determining whether the calibration credit data indicates a calibration credit is available for the requested calibration; and
updating the calibration data in the memory fob in response to the requested calibration being initiated.

10. The method of claim 9, the coupling of the memory device further comprising:
coupling a smart card to a calibration unit for receiving calibration credit data from the smart card;
determining whether the calibration credit data indicates a calibration credit is available for the requested calibration; and
updating the calibration data in the smart card in response to the requested calibration being initiated.

11. The method of claim 7 further comprising:
generating a signal that enables the calibration unit to perform a calibration procedure on a signal level measurement circuit coupled to the calibration unit.

12. The method of claim 11, the calibration procedure signal generation further comprising:
generating a signal that enables one of a plurality of calibration procedures to be performed on a signal level measurement circuit coupled to a calibration unit.

13. An apparatus comprising:
a calibration unit for calibrating a signal level measurement circuit that is operable to generate signal level measurements for a set of broadband RF signals;
a calibration authorization interface for determining whether a calibration credit is available for a requested calibration procedure; and
an access monitor for enabling operation of the calibration unit in response to the calibration authorization interface determining that a calibration credit is available for a requested calibration procedure.

14. The apparatus of claim 13, the calibration authorization interface comprising:
a port for receiving a calibration credit token; and
a token reader for receiving calibration credit data from the token received in the port.

15. The apparatus of claim 14 wherein the port is a communication port.

16. The apparatus of claim 15 wherein the communication port receives a memory device and the token reader downloads calibration credit data from the memory device.

17. The apparatus of claim 16 wherein the memory device is a smart card.

18. The apparatus of claim 17 wherein the smart card downloads calibration credit data to the calibration authorization interface.

19. The apparatus of claim 15 wherein the communication port is coupled to a keypad and the calibration authorization interface further comprises:
a password evaluator for determining whether a character string entered through the keypad is an authorized password; and
a calibration credit evaluator for determining whether an authorized password has a corresponding calibration credit for a requested calibration procedure.

20. The apparatus of claim 19, the calibration credit evaluator further comprising:
a memory for storing calibration credit data for at least two types of calibration procedures.
